(19) **Europäisches Patentamt**

**European Patent Office**

**Office européen des brevets**

(11) **EP 1 584 652 A1**

(12) **EUROPEAN PATENT APPLICATION**

(43) Date of publication:
**12.10.2005 Bulletin 2005/41**

(51) Int Cl.⁷: **C08L 23/04**

(21) Application number: **04101431.7**

(22) Date of filing: **07.04.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(71) Applicant: **TOTAL PETROCHEMICALS RESEARCH FELUY**
**7181 Seneffe (Feluy) (BE)**

(72) Inventor: **Michel, Jacques**
**7181 Feluy (BE)**

(54) **Blends of chromium-based and bimodal ziegler-natta polyethylenes**

(57) The present invention discloses a blend comprising a chromium -based polyethylene resin and a bimodal polyethylene resin prepared either with a Ziegler-Natta or with a metallocene catalyst system. The blend has simultaneously improved environmental stress crack resistance and good processing behaviour with no loss of rig idity.

**Description**

The present invention relates to the field of compositions comprising a polyethylene resin prepared with a chromium -based catalyst system and a bimodal polyethylene resin prepared with a Ziegler-Natta or with a metallocene catalyst system.

Polyethylenes (PE) of medium -to-high density (0.94-0.965 g/cm$^3$) produced by chromium-base catalyst systems (Phillips -type) have been used in many blow - moulding applications because of their excel lent processing behaviour that can be attributed, at least partly, to the presence of long chain branching (see M. P. Mc Daniel, D. C. Rohlfing, and E. A. Benham, in 'Polym. React. Eng., 11 (2), 101, 2003).

For the past thirty years, emphasis has been p laced on improving the yield, but most importantly, on improving the compromise between environmental stress crack resistance (ESCR) and rigidity for polyethylene resins prepared with chromium-based catalyst systems such as described for example in EP -A-857736 or in Stephenne et al. (V. Stephenne, D. Daoust, G. Debras, M. Dupire, R. Legras, and J. Michel, 'Influence of the molecular structure on slow crack growth resistance and impact fracture toughness in Cr -catalyzed ethylene-hexene copolymers for pipe app li- cations', J. Appl. Polym. Sci. 82, 916, 2001). For a given Young E-modulus or for a given density (for unfilled samples), the ESCR failure time was substantially increased. The resins were thus classified into two groups in terms of an ESCR/ rigidity co mpromise: the first generation Cr-based resins and the second generation Cr -based resins. The second generation Cr-based PE resins had longer failure times than the first generation resins. The second generation Cr- based resins, however had slightly reduced processing performances: this was observed for example by earlier onset of either surface or bulk melt fracture phenomena.

Another class of polyethylene resins, within to the same range of densities as the chromium-based resins has also been developed. These resins were typically designed for pipe applications but they were extended to blow -moulding applications such as, for example, for fuel tank applications. These resins were either bimodal Ziegler-Natta (ZN)-based polyethylene (as described in J. Sc heirs, L.L. Böhm, J. S. Boot, and P. S; Leevers, TRIP vol. 4(12), p. 408, 1996) or metallocene-based polyethylene as disclosed for example in WO 02/34829. Such PE resins were endowed with excellent slow crack growth resistance: the ESCR was typically increased by one order of magnitude with respect to second generation chromium-based polyethylene resins. Processing, however was much more difficult and some high -throughput blow-moulding applications could not be carried out, mainly because of early appearance of melt fracture phenomena. Additionally, bimodal ZN -based or metallocene PE were much more expensive than the first generation Cr-based PE resins.

The first and second generation chromium -based polyethylene resins remained far below the ZN-based PE resins in terms of ESCR. A slight but insufficient improvement was obtained by using Cr-based PE resins produced in double -loop reactors as disclosed for example in EP -A-952165.

Blends of Cr-based polyethylene with low amount of resin having a high ESCR were then used. These other resins were for example selected from linear low density metallocene-produced polyethylene (mLLDPE) having high molecular weight (HMW). Such blends as disclosed for example in EP -A-1319685 had an improved ESCR. The gain in ESCR with respect to the Cr-based PE resin alone was important for amounts of high ESCR resins typically of more than 10 wt%, but the rigidity was severely reduced. For example, the density of a blend comprising 90 wt% of Cr-based PE having a density of 0.957 g /cm$^3$ and 10 wt% of metallocene-produced linear low density polyethylene (mLLDPE) having a density of 0.927 g/cm$^3$ incurred a drop of over 0.003 g/cm$^3$ and the rigidity was reduced accordingly.

Even less desirably, adding a HMW mLLDPE resin to the Cr -based resin led to a considerable loss of processing behaviour.

Alternatively, blends of first and second generation Cr -based resins could be prepared. In order to obtain a significant increase in ESCR failure time with respect to that of 1$^{st}$ generation Cr-based resin, it was necessary to blend at least 50 wt% of a second generation Cr-based resin to a first generation Cr-based resin, thus resulting in a composition having reduced processing performances.

There is thus a need to provide, with a simple and cost effective method, polyethylene resins having a better ESCR/rigidity compromise than Cr -based PE resins while keeping an excellent processing behaviour in blow moulding applications.

It is an aim of the present invention to prepare a composition, based pr imarily on a chromium-based polyethylene resin that has improved ESCR while keeping a good rigidity.

It is also an aim of the present invention to prepare a polyethylene composition that is easy to process.

It is another aim of the present invention to provide a method for preparing a Cr-based polyethylene composition that is simple and cost effective.

Accordingly, the present invention provides a blend comprising

- from 70 to 95 wt%, preferably from 75 to 92 wt%, based on the weight of the total composition, of a chromium- based polyethylene resin or of a monomodal Ziegler-Natta polyethylene resin, preferably of a chromium - based polyethylene resin; and
- from 5 to 30 wt%, preferably from 8 to 25 wt%, based on the weight of the total composition, of a bimodal polyethylene resin prepared either with a Ziegler-Natta or with a metallocene catalyst system.

The chromium-based polyethylene resin typically has a density of from 0.934 to 0.965 $g/cm^3$, preferably of 0.940 $g/cm^3$ to 0.965 $g/cm^3$, and a high load melt inde x (HLMI) of from 1 to 100 dg/min. It can be a first or a second generation chromium-based polyethylene resin. Preferably it is a first generation polyethylene resin.

The bimodal resin is preferably prepared with a Ziegler -Natta catalyst system. It has a density ranging from 0.940 to 0.962 $g/cm^3$ and a high load melt flow index (HLMI) of from 4 to 40 dg/min, preferably of from 6 to 26 dg/min.

The density is measured following the method of standard test ASTM 1505 at a temperature of 23 °C and the melt flow index is measured following the method of standard rest ASTM D 1238 at a temperature of 190 °C, under a load of 21.6 kg for the high load melt index HLMI and under a load of 2.16 kg for MI2.

Rigidity as measured by tensile or flexural tests on resins moul ded by compression correlates linearly with density for ethylene copolymer with densities above 0.93 $g/cm^3$ and usual alpha -olefins as comonomers, as disclosed by many authors (see for example, K. Jordens, G. L. Wilkes, J. Janzen, D. C. Rohling, and M. B. Welch, Polymer, 41, p. 7175-7192 (2000)). For our PE grades, the following correlations were obtained respectively between the flexural ASTM D - 790 E modulus (0.4 % strain) and density and between the ISO R527/A tensile E modulus (1 %) and density:

Flexural ASTM E Modulus (MPa)= 36,101 x (density in $g/cm^3$) -33,068.

The relationship was derived from 24 data points in the density range of from 0.930 to 0.964 $g/cm^3$, and with a correlation coefficient $r^2$ of 0.96.

ISO Tensile E Modulus (Mpa)= 27,020 x (density in $g/cm^3$) - 24,656.

The relationship was derived from 23 data points in the density range of from 0.930 to 0.960 $g/cm^3$ and with a correlation coefficient $r^2$ of 0.96.

The environmental stress crack resistance was measured following the method of standard test ASTM D-1693-70 condition B with 10 % antarox (ESCR10) or with 100 % antarox (ESCR100). The failure time for ESCR10 is from 2 to 3 times smaller than that for ESCR100. The test ESCR100 is thus preferably selected for the least resistant resins in order to better discriminate their ESCR performances.

In the present invention, the bimodal resin added to the chromium -based polyethylene resin has a higher density than the mLLDPE added in the prior art compositions. Contrary to the prior art compositions, th e blends of the present invention have an excellent rigidity. In addition, the mLLDPE of the prior art had a high molecular weight resulting in a lower HLMI of the final blend than that of the starting chromium resin. The presence of this high molecular weight fraction resulted in reduced processing performances. The bimodal resins added in the present invention have both a low molecular weight fraction favourable to easy processing and a high molecular weight fraction favourable to good ESCR characteristics.

The bimodal resins additionally have a broad molecular weight distribution that is compatible with that of chromium -based resins. The molecular weight distribution is defined by the polydispersity index D that is equal to the ratio Mw/Mn wherein Mw is the weight average molecular weight and Mn is the number average molecular weight. The polydispersity of the bimodal polyethylene resin typically ranges from 6 to 25, the low end being associated with the metallocene -prepared resins and the high end with the Ziegler-Natta resins. The polydispersity of the chromium-based polyethylene resin ranges from 7 to 10 for the first generation resins and from 10 to 25 for the second generation resins.

The preferred bimodal polyethylene resins are Ziegler -Natta resins produced in a double loop reactor

The polyethylene blend of the present invention simultaneously

- keeps the good processing properties of chromium -based polyethylene resins, preferably of first generation chromium -based polyethylene resins
- gains the goo d ESCR characteristics of the bimodal polyethylene resin
- keeps good rigidity properties
- exhibits homogeneous dispersion of high MW LLDPE species

In the prior art compositions, the added high molecular weight linear low density polyethylene was difficu lt to disperse into the Cr-based resin and inclusions could be detected by optical microscopy. The bimodal polyethylene resin of the present invention can easily be dispersed into the Cr -based resin and thus does not suffer from the prior art problems

The composition can be prepared by introducing the bimodal resin directly into the main extruder hopper: it can be introduced either as a fluff or as pellets or as a master batch if fillers and pigments are added at the same time. If this method is used, the amount of added polyethylene is preferably of less than 15 wt% based on the weight of the total composition.

Alternatively, any conventional method of melt blending can be used.

The resin blends of the present invention are useful in blow moulding applications requiring high ESCR resistance together with easy processing such as for example fuel tanks or large containers and in the production of pipes or tubing at high throughput rates.

### List of Figures.

Figure 1 represents the compromise environmental str ess crack resistance ESCR expressed in hours at a temperature of 50 °C and with 100 % antarox, as a function of density of the resin or of the resin blend expressed in g/cm$^3$.

Figure 2 represents the die swell expressed in % as a function of shear rate expressed in s$^{-1}$ for several resins and resin blends. It must be noted that the tests are typically interrupted just before melt fracture occurs.

Figure 3 represents the shear stress expressed in Pa as a function of shear rate expressed in s$^{-1}$ for several resins and resin blends. The vertical arrows indicate the occurrence of melt fracture for each blend.

Figure 4 represents the critical shear rate at the onset of melt fracture expressed in s-1 as a function of the logarithm of HLMI expressed in dg/min for several blends with a concentration of polyethylene modifier of 8 wt%. A good correlation between critical shear rate at onset of melt fracture and logarithm of HLMI is observed for blends having a concentration of polyethylene modifier of 8 wt%.

### Examples.

Several resins and resin blends were tested for environmental stress crack resistance, for die swell, for onset of melt fracture and for traction.

The starting first generation chromium -based polyethylene resins were respectively:

- Resin R1, sold by ATOF INA under the name Lacqtene ® 2002 SN58;
- Resin R2, sold by ATOFINA under the name Lacqtene ® 2003 SN53;
- Resin R3, sold by ATOFINA Research under the name Finathene ® 47100.

The modifier resins were respectively:

- Resin R4 is a monomodal metallocene -prepared PE resin, sold by ATOFINA Research under the name Finacene ® ER2281.
- Resin R5 is a bimodal Ziegler-Natta PE resin, sold by ATOFINA Research under the name Finathene ® BM593.
- Resin R6 is a bimodal Ziegler-Natta PE resin, sold by ATOFINA Research under the name Finathene® XS10N
- Resin R7 is a second generation Cr resin of low density (0.934 g/cm$^3$) sold by ATOFINA Research under the name Finathene® HF513
- Resin R8 is a monomodal high molecular weight (HMW) ZN LLDPE produced as described in EP 0989141 example 4
- Resin R9 and R10 HMW mPE produced as described in example 7 of EP0989141

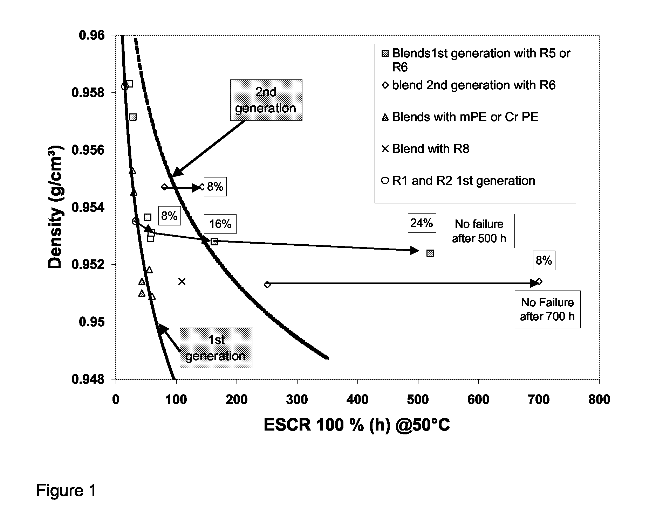

Several second generation Cr resins sold by ATOFINA (Finathene 53080, 53140, SR572, SR583, SR523) were used to construct ESCR100 -density curve represented in Figure 1

For comparison with Finathene 47100 (resin R3), a second generation chromium-based polyethylene resins R11 sold by ATOFINA under the name Lacqtene® 2001 TN46 was used.

Two commercial PE resins of 2$^{nd}$ generation (SR523-type) R12 and R13 were also modified by addition of some of the above modifiers.

The properties of these resins are summarised in Table I.

TABLE I.

| Resin | Density (g/cm$^3$) | MI2 (dg/min) | HLMI (dg/min) | D=Mw/Mn |
|---|---|---|---|---|
| R1 | 0.958 | 0.3 | 28 | 7.5 |
| R2 | 0.952 | 0.2 | 23 | 8 |
| R3 | 0.9445 | | 8.4 | 8 |
| R4 | 0.927 | 0.33-0.4 | 14 | 2.5 |
| R5 | 0.959 | 0.27 | 26 | 14 |
| R6 | 0.949 | | 8 | 17 |
| R7 | 0.934 | 0.15 | 14.5 | 15 |
| R8 | 0.925 | | 0.2 | 10 |
| R9 | 0.927 | | 0.6 | 4 |
| R10 | 0.922 | | 0.15 | 4 |
| R11 | 0.945 | | 11 | 18 |
| R12 | 0.9547 | | 20.3 | 13.1 |
| R13 | 0.9513 | | 19.9 | 15 |

All blends were produced on a twin -screw Brabander extruder TSE 20/40 under nitrogen blanketing at a temperature of 210 °C, using a screw profile that gave a similar state of dispersion for HMW LLDPE as that encountered for bimodal ZN PE or mPE extruded on industrial extruder such as for example Werner Pfeiderer Z5K58. The state of dispersion i s estimated by image analysis: the percentage of area occupied by HMW nodules, as observed by optical microscopy on a thin film of bimodal PE resin, is recorded. A good dispersion is obtained when such percentage is below 1 %.

For all resins and resin co mpositions, the processing performances were appraised by determination of their die swell behaviour and of their critical shear rate and stress at the onset of melt fracture. For the die swell determination the die had a length L over diameter D ratio L/D of 10/2. For the onset of melt fracture determinations, the die had a ratio L/D of 15/0.752 and the test was carried out at a temperature of 210 °C in a Göttfert capillary rheometer.

A dispersion analysis was carried out on all the blends containing 8 wt % of modifier PE resin: the dispersion was excellent and less than 0.4% of inclusions were observed. This was much lower than the percentage of inclusions observed for blends of the same starting Cr-based PE resin with 8 wt% of HMW mPE or ZN PE resins having similar HLMI.

The ESCR results are displayed in Figure 1 and Tables II to IV. Table II displays for resins R1 and R2 (1st generation Cr PE) and their blends, the ESCR, density and, in some cases, tensile test results as well as shear rate at onset of melt fracture (MF).

TABLE II.

| PE | Blend | ESCR h | Density g/cm$^3$ | HLMI dg/min | Onset MF s-1 | E (ISO) MPa | Yield stress MPa | Strain at break % |
|---|---|---|---|---|---|---|---|---|
| R1 | none | <22 | 0.958 | 22.9 | | | | |
| | 8% R4 | 29.6 | 0.958 | 22 | | | | |
| | 8% R5 | 22.6 | 0.958 | 23.1 | | | | |
| | 8% R6 | 28.1 | 0.957 | 21.1 | | | | |
| | 8% R7 | 27.3 | 0.955 | 22.1 | | | | |
| R2 | none | 33 | 0.954 | 20 | 1350 | | | |
| | 8% R4 | 56.6 | 0.951 | 19.6 | | | | |
| | 8% R5 | 52.6 | 0.954 | 20.4 | | | | |
| | 8% R6 | 57.2 | 0.953 | 18.6 | | | | |

TABLE II.   (continued)

| PE | Blend | ESCR h | Density g/cm$^3$ | HLMI dg/min | Onset MF s-1 | E (ISO) MPa | Yield stress MPa | Strain at break % |
|---|---|---|---|---|---|---|---|---|
| | 8% R7 | 54.9 | 0.952 | 19.5 | | | | |
| | 8% R6 | 58.3 | 0.953 | 18.6 | 1150 | 1053 | 25.73 | 364 |
| | 16% R6 | 162.8 | 0.953 | 17.3 | 1050 | 1037 | 25.4 | 671 |
| | 24% R6 | > 500 | 0.952 | 16.1 | 850 | 1033 | 25.34 | >800 |
| | 8% R8 | 108.8 | 0.951 | 14 | 450 | 1012 | 24.87 | 696 |
| | 8% R9 | 42.7 | 0.951 | 15.1 | 750 | 1015 | 24.96 | >800 |
| | 8% R10 | 42.7 | 0.951 | 13.8 | 50 | 1009 | 24.81 | >800 |

Figure 1 represents ESCR100 expressed in hours at a temperature of 50 °C as a function of density expressed in g/cm$^3$. The first generation chromium -based polyethylene resins all fell on the left curve labelled 1st generation type and exhibited the expected behaviour of decreasing ESCR with increasing density. The second generation chromium -based polyethylene resin, such as resins R12 and R13, all fell on the right curve labelled 2nd generation-type and exhibited the same trend as the first generation resins, but with substantially higher ESCR values at equivalent densities. As can be gather ed from Tables II to IV and illustrated in Figure 1, when the first generation chromium -based polyethylene resin R1 or R2 was compounded with 8 wt% of a monomodal metallocene linear low density polyethylene (mLLDPE) resin R9 or R10, the ESCR was substantially increased as compared to the starting Cr -based PE resin. The same first generation chromium-based polyethylene resin R1 or R2, when blended with 8 wt% of bimodal Ziegler-Natta polyethylene resin R4, R5 or R6 had about the same ESCR but without reductio n of density leading therefore to a ESCR/density curve substantially shifted to the right. When the first generation chromium -based polyethylene was compounded with more bimodal Ziegler -Natta polyethylene resin, with amounts of up to 25 wt%, the ESCR performances increased nearly exponentially. For example, ESCR performances were found to equal those of the second generation chromium -based polyethylene resins such as R12 or R13 with the addition of 16 % of bimodal ZN PE. Adding 24 % of bimodal Ziegler - Natta polyethylene (ZN PE) resin further increased the ESCR100 of the blends while keeping processing performances at levels above those registered for the Cr-based resins having the best ESCR performances, at similar values of HLMI.

For comparison, blending the same first generation resins with 8 % high molecular weight (HMW) PE resin (HLMI <2) led to a drop of processing that rendered these resins unsuitable for typical applications of Cr PE resins.

Furthermore, the dispersion became insufficient, leading to inclusions of HMW PE nodules.

Blends were also prepared from 8 wt% of bimodal ZN PE (R6) and 92 wt% of 2 nd generation Cr PE, as displayed in Table III. Their ESCR100 was equivalent to that of blends prepared with 24 wt% of the same ZN PE resin (R6) an d 76 wt% of 1st generation Cr PE resins.

TABLE III.

| Resin | Blend | ESCR10 h | density g/cm$^3$ | HLMI dg/min | onset MF s-1 |
|---|---|---|---|---|---|
| R12 | none | 80 | 0.955 | 20.3 | |
| | 8% R4 | 192.3 | 0.952 | 19.7 | 1250 |
| | 8% R5 | 142.7 | 0.956 | 20.7 | 1250 |
| | 8% R6 | 219 | 0.955 | 18.8 | 1350 |
| | 8% R7 | 188.1 | 0.953 | 19.7 | 1250 |
| R13 | none | 250 | 0.951 | 19.9 | |
| | 8% R6 | >700 | 0.951 | 18.6 | 1150 |

From these observations, it was concluded that for both types of chromium - based PE resins, at equivalent density, blends with bimodal ZN PE according to this invention have higher ESCR than the starting chromium resin or than blends with HMW resins.

Shear rate at onset of melt fracture was not strongly reduced by the addition of a bimodal ZN PE and it remained acceptable: the lowest onset of melt fracture shear rate (with addition of 24 wt% of resin R6) was found to be 850 s -1 for a value that is close to that observed for a second generation Cr -based PE with excellent ESCR performance and having the same HLMI.

Furthermore, as observed for blends with the 1 st generation chromium -based PE resins, the die swell behaviour (percentage and maximum shear rate before melt fracture) was not strongly affected by blending up to 20 -24 % of bimodal PE resin of this invention.

Table IV presents ESCR results obtained from blends of first generation Cr - based PE (R3) with bimodal ZN PE (R5 or R6) or monomodal mPE (R4) as compared to second generation Cr -based PE (R11). First generation Cr -based PE resin R3 modified with 8 % bimodal ZN PE (R5 and R6) of this invention exhibited higher ESCR10 at comparable dens ity than those modified with mPE (R4) or than unmodified second generation Cr -based PE resins (R11). Also, for the low HLMI resin R3 and its blends, the gain in processing with respect to a second generation Cr-based PE resin (R11) was substantial.

TABLE IV.

| Resin | Blend | ESCR10 h | Density g/cm$^3$ | HLMI dg/min | onset MF s-1 |
|-------|-------|----------|------------------|-------------|--------------|
| R3 | none | 56.7 | 0.945 | 8.1 | 1450 |
| | 8% R4 | 118 | 0.943 | | 1450 |
| | 8% R5 | 94 | 0.946 | | 1450 |
| | 8% R6 | 118 | 0.945 | | 1550 |
| | 8% R7 | 81 | 0.944 | | 1650 |
| R11 | none | 188 | 0.947 | 11.5 | 650 |

In conclusion, adding up to 16 wt% of bimodal ZN PE (R6 -type) to first generation Cr-based resin (R3-type) produced resins with ESCR behaviour comparable to that of second generation Cr -based PE resins (R11-type) with a substantially improved processing behaviour.

This can be seen in Figu res 2 and 3 representing the die swell and melt fracture onset as a function of shear rate.

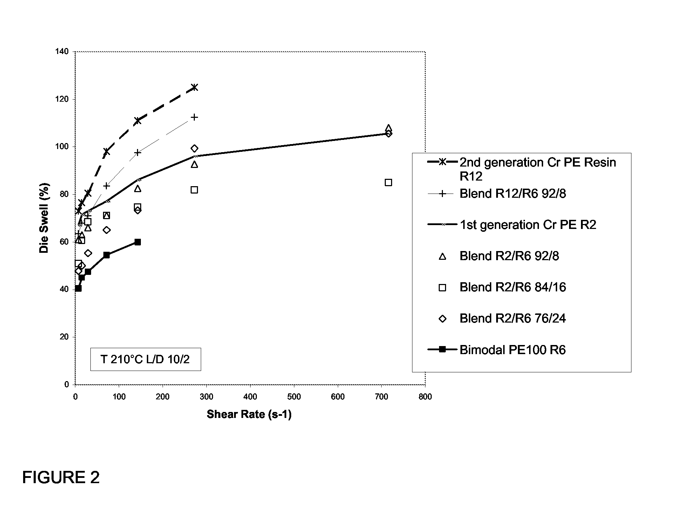

Figure 2 represents the die swell as a function of shear rate. It shows that the bimodal ZN resin R6 alone had a very small die swell but that melt fracture occurred at very low values of shear rate, of the order of 150 s$^{-1}$. The second generation chromium-based PE resins R12 had a large die swell, rapidly increasing with shear rate and melt fracture occurred at fairly low values of shear rate, of the order of 275 s -1. The first generation chromium -based PE resins R1, R2 and R3 had a die swell that fell between that of the bimodal ZN resin R5 and that of the second generation chromium -based resin R12, but no melt fracture was observed at the shear rates that were test ed (up to 800 s-1). As can be seen, blends prepared from first generation chromium -based PE resin R2 with respectively 8 wt%, 16 wt% and 24 wt% of bimodal ZN PE resin R6 all exhibited the same excellent melt fracture behaviour as the first generation chromium-based PE resins, i.e., no melt fractures were recorded up to 800 s$^{-1}$, and additionally, their die swell was reduced at low shear rate. Figure 2 also shows that the difference in die swell behaviour is primarily related to the type of starting resin. Indeed, it was observed that all blends prepared with the same type of starting resin remain grouped and were significantly separated from groups prepared with different types of starting resins.

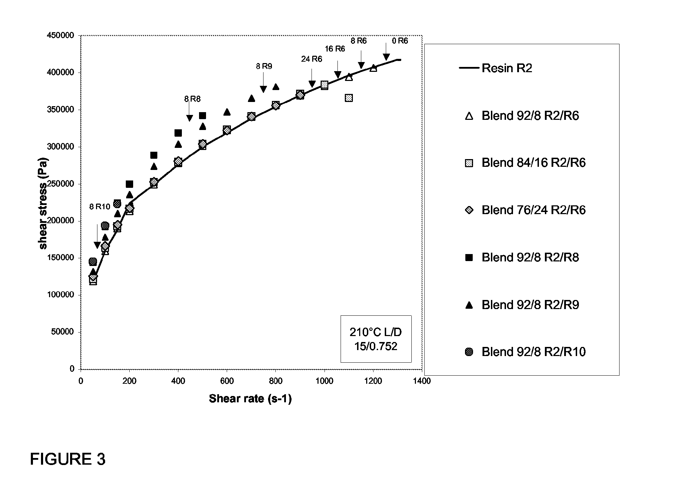

Figure 3 represents the shear stress as a function of shear r ate at 210 °C, for a die having a length (L) over diameter (D) ratio L/D of 15/0.752. As can be seen, blends prepared from first generation chromium -based PE resin R2 with respectively 8 wt%, 16 wt% and 24 wt% of bimodal ZN PE resin R6 all exhibited the same excellent melt fracture behaviour as the first generation chromium - based PE resins, i.e., no melt fractures were recorded, and additionally, their die swell was reduced at low shear rate. Figure 3 also shows that for the same blends the shear stress versus shear rate curve was not strongly affected at shear rates typically encountered during processing (from 100 to 1500 s$^{-1}$). It was further observed that shear rate at onset of melt fracture linearly decreased with increasing concentration of bimodal ZN PE R6 (see Table II) but this decrease was smaller than that observed for blends of the same first generation Cr-based PE resins with HMW mLLDPE (resins R9 or R10) or with HMW ZN PE (resin R8). Also at a given shear rate, related to the throughput of the extruder, the shear stress, or pressure at the die, was much higher for blends with HMW LLDPE modifiers.

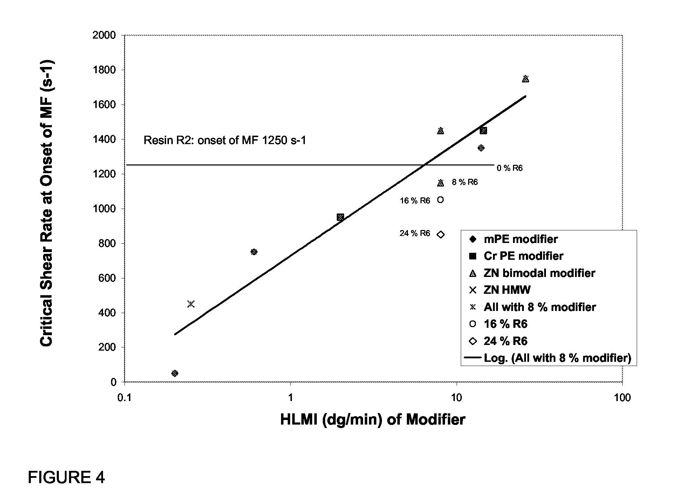

Figure 4 representing the critical shear rate at the onset of melt fracture as a function of HLMI shows a semi -logarithmic relationship between the critical shear rate at melt fracture and HLMI for a given concentration of polyethylene modifier of 8 wt% in this test. On the same Figure, the drop of shear rate at onset of melt fracture with concentration can be visualised for blends of resin R2 with va rious concentrations of bimodal ZN PE resin R6. Blend with 8 wt% of modifier and having HLMI 1.5 dg/min gave similar shear rate at onset of melt fracture than the blend containing 24 wt% of resin R6. Blending a given Cr resin with a bimodal PE resin accord ing to the present invention was thus not detrimental for processing.

During extrusion of the blends, the extruder head pressure, the torque, the melt temperature at the die and the mass throughput were recorded. From these measurements, the extruder spec ific energy was calculated using formula I developed by Martin (Martin C. : Twin -screw extruder, ch.2, in "The SPE guide on extrusion technology and troubleshooting", J. Vlachopoulos and J.R. Wagner, eds, SPE, Brookfield, 2001.)

$$\text{Specific energy (kWh/kg)} = (kWm \times \varepsilon \times T\% \times RPM ) / (Q \times RPMmax)$$

wherein

- kWm is the motor kilowatt rating = 20.76 kW for Brabander TSE 20/40
- $\varepsilon$ is the system efficiency = 0.954
- T% is the torque ratio = torque/max torque, with the maximum torque = 200 Nm
- Q is the output rate express ed in kg/h
- RPM is rotation per minute

The results are summarised in Table V for an extruder Brabander TSE20, having a screw profile adapted to give same dispersion as industrial extruder, temperature settings of: 200 -200-200-200-200 °C and a die diameter of 4 mm.

TABLE V.

| Blend | screw RPM rpm | Throughput g/h | Torque Nm | Die pressure bars | Melt T° °C | Specific Energy. kWh/ kg |
|---|---|---|---|---|---|---|
| 92%R12/8%R4 | 90 | 1920 | 24.7 | 36.1 | 213 | 0.46 |
| 92%R12/8%R5 | 90 | 7980 | 25.4 | 38.2 | 202 | 0.46 |
| 92%R12/8%R6 | 90 | 1976 | 22 | 37.2 | 202 | 0.40 |
| 92%R12/8%R7 | 90 | 1998 | 22.1 | 33.3 | 204 | .039 |
| 92%R13/8%R4 | 90 | 1967 | 21.5 | 33.6 | 204 | 0.39 |
| 92%R13/8%R5 | 90 | 1974 | 20.5 | 38.2 | 203 | .037 |
| 92%R13/8%R6 | 90 | 1988 | 29.2 | 44.1 | 201 | 0.52 |
| 92%R2/8%R4 | 90 | 2600 | 23.9 | 45.1 | 203 | 0.33 |
| 92%R2/8%R5 | 90 | 2850 | 24 | 37.7 | 201 | 0.30 |
| 92%R2/8%R6 | 90 | 2780 | 24 | 43 | 203 | 0.31 |
| 92%R2/8%R7 | 90 | 2840 | 24 | 42 | 202 | 0.30 |
| 92%R2/8%R6 | 80 | 3075 | 29.8 | 47.6 | 199 | 0.31 |
| 84%R2/16%R6 | 80 | 3057 | 28.8 | 46.9 | 202 | 0.30 |
| 76%R2/24%R6 | 80 | 3088 | 29.4 | 50.6 | 199 | 0.30 |
| 92%R2/8%R8 | 80 | 2187 | 20.7 | 48 | 192 | 0.30 |
| 92%R2/8%R9 | 80 | 2357 | 25.1 | 48 | 193 | 0.34 |
| 92%R2/8%R10 | 80 | 2641 | 25.3 | 48.5 | 196 | 0.30 |

It can be concluded from Table V that blends with second generation chromium - based PE resins require more specific energy than those prepared with first generation chromium-based PE resins: typically about 0.4 to 0.5 kWh/g for second generation chromium-based PE resins versus 0.3 to 0.35 kWh/g for first generation chromium-based PE resins.

For comparison, blends prepared from first and second generation chromium - based polyethylene resins were prepared in order to obtain compositions having improved ESCR. Observable increase in ESCR was observed for blends containing at least 50 wt% of second generation resin R13. The addition of such large quantities of second generation resin led to deterioration of processing as compared to first generation Cr-based PE resins.

Traction tests were also carried out on the polyethylene resin compositions according to the present invention (Table II). The addition of 8 wt% of bimodal ZN PE resin R6 to first generation Cr-based resins R1 or R2 produced blends having an E-modulus and a yield stress higher than those observed for blends prepared from the same first generation Cr-based resins with 8 wt% of either HMW mPE R9 or R10 or HMW ZN PE R8. Interestingly, when the amount of bimodal ZN PE (resin R6) in blends with first generation chromium -based polyethylene resin R2 increased, ductility of the resulting composition also increased as testified by the increase of percentage strain at break. The same ductility behaviour was observed with the addition of HMW PE (resins R8 to R10) but these blends suffered from reduced processing capability, rigidity and homogeneity.

**Claims**

1. A blend comprising

   - from 70 to 98 wt% of a chromium -based polyethylene resin, based on the total weight of the blend ; and
   - from 2 to 30 wt% of a bimodal polyethylene resin having a density of from 0.940 to 0.965 g/cm$^3$ and prepared either with a Ziegler -Natta or with a metallocene catalyst system.

2. The blend of claim 1 wherein the amount of chromium -based polyethylene resin is of from 75 to 95 wt % based on the total weight of the blend and the amount of bimodal polyethylene resin is of from 5 to 25 wt%.

3. The blend of claim 1 or claim 2 wherein the bimodal polyethylene resin is prepared with a Ziegler-Natta catalyst system.

4. The blend of any one of claims 1 to 3 wherein the melt flow rate (HLMI) of the bimodal resin is of from 4 to 40 dg/min.

5. A method for preparing the blend of any one of claims 1 to 4 wherein the bimodal polyethylene resin is introduced in the main extruder hopper as a fluff, pellets or master batch.

6. A method for preparing the blend of any one of claims 1 to 4 wherein the bimodal polyethylene resin is introduced in the main extruder hopper as a master batch including fillers and/or pigments and/or processing aids.

7. Use of the blend according to any one of claims 1 to 4 for increasing the environmental stress crack resistance (ESCR) of the resin while maintaining rigidity and processing properties.

8. Use of the blend according to any one of claims 1 to 4 in blow moulding or in pipe and tubing applications.

9. Blow-moulded articles prepared with the blend of any one of claims 1 to 4.

10. Pipes and tubes prepared with the blend of any one of claims 1 to 4.

Figure 1

FIGURE 2

FIGURE 3

FIGURE 4

**European Patent Office**

## EUROPEAN SEARCH REPORT

Application Number

EP 04 10 1431

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | PATENT ABSTRACTS OF JAPAN vol. 2003, no. 10, 8 October 2003 (2003-10-08) & JP 2003 165873 A (ASAHI KASEI CORP), 10 June 2003 (2003-06-10) * abstract * | 1-10 | C08L23/04 |
| X | PATENT ABSTRACTS OF JAPAN vol. 2003, no. 11, 5 November 2003 (2003-11-05) & JP 2003 213053 A (ASAHI KASEI CORP), 30 July 2003 (2003-07-30) * abstract * | 1,3-10 | |
| A | EP 0 273 284 A (NIPPON OIL CO LTD) 6 July 1988 (1988-07-06) * the whole document * | 1-10 | |
| A | EP 1 041 096 A (FINA RESEARCH) 4 October 2000 (2000-10-04) * the whole document * | 1-10 | |

TECHNICAL FIELDS SEARCHED (Int.Cl.7)

C08L

The present search report has been drawn up for all claims

| Place of search | Date of completion of the search | Examiner |
|---|---|---|
| The Hague | 27 September 2004 | Droghetti, A |

**ANNEX TO THE EUROPEAN SEARCH REPORT
ON EUROPEAN PATENT APPLICATION NO.**   EP 04 10 1431

This annex lists the patent family members relating to the patent documents cited in the above-mentioned European search report.
The members are as contained in the European Patent Office EDP file on
The European Patent Office is in no way liable for these particulars which are merely given for the purpose of information.

27-09-2004

| Patent document cited in search report | | Publication date | Patent family member(s) | | Publication date |
|---|---|---|---|---|---|
| JP 2003165873 | A | 10-06-2003 | NONE | | |
| JP 2003213053 | A | 30-07-2003 | NONE | | |
| EP 0273284 | A | 06-07-1988 | JP | 63154753 A | 28-06-1988 |
| | | | CA | 1315447 C | 30-03-1993 |
| | | | DE | 3773631 D1 | 14-11-1991 |
| | | | EP | 0273284 A2 | 06-07-1988 |
| | | | US | 4835219 A | 30-05-1989 |
| EP 1041096 | A | 04-10-2000 | EP | 1041096 A1 | 04-10-2000 |
| | | | AT | 240356 T | 15-05-2003 |
| | | | AU | 3164100 A | 16-10-2000 |
| | | | DE | 60002701 D1 | 18-06-2003 |
| | | | DE | 60002701 T2 | 08-04-2004 |
| | | | WO | 0058381 A1 | 05-10-2000 |
| | | | EP | 1169367 A1 | 09-01-2002 |
| | | | ES | 2197863 T3 | 16-01-2004 |
| | | | JP | 2000290304 A | 17-10-2000 |
| | | | PT | 1169367 T | 29-08-2003 |
| | | | US | 6245867 B1 | 12-06-2001 |

EPO FORM P0459

For more details about this annex : see Official Journal of the European Patent Office, No. 12/82